(19) Europäisches Patentamt

European Patent Office

Office européen des brevets

(11) **EP 1 406 000 B1**

(12) **EUROPÄISCHE PATENTSCHRIFT**

(45) Veröffentlichungstag und Bekanntmachung des Hinweises auf die Patenterteilung:
**26.07.2006   Patentblatt 2006/30**

(51) Int Cl.:
***F02D 41/10*** *(2006.01)*      ***B60K 31/00*** *(2006.01)*

(21) Anmeldenummer: **02102404.7**

(22) Anmeldetag: **01.10.2002**

(54) **Motorsteuerung für die Brennkraftmaschine eines Kraftfahrzeuges**

Engine control system of an internal combustion engine

Commande de moteur des fonctions d'un moteur à combustion interne

(84) Benannte Vertragsstaaten:
**DE FR GB**

(43) Veröffentlichungstag der Anmeldung:
**07.04.2004   Patentblatt 2004/15**

(73) Patentinhaber: **Ford Global Technologies, LLC. Dearborn MI 48126 (US)**

(72) Erfinder:
- **Lenz, Ingo**
  **50858, Koeln (DE)**
- **Pingen, Bert**
  **53913, Swisttal (DE)**
- **Schamel, Andreas R**
  **53227, Bonn (DE)**
- **Grieser, Klemens**
  **40764, Langenfeld (DE)**
- **Borrmann, Dirk**
  **50354, Huerth (DE)**

(74) Vertreter: **Drömer, Hans-Carsten et al Ford-Werke Aktiengesellschaft, Patentabteilung NH/DRP, Henry-Ford-Strasse 1 50725 Köln (DE)**

(56) Entgegenhaltungen:
**EP-A- 0 545 027      US-A- 5 025 380**
**US-A- 6 021 370      US-B1- 6 282 482**

**Beschreibung**

Die Erfindung betrifft ein Verfahren zur Steuerung der Brennkraftmaschine eines Kraftfahrzeuges sowie eine zur Durchführung des Verfahrens ausgebildete Motorsteuerung.

Die Brennkraftmaschine eines Kraftfahrzeuges kann von der zugehörigen Motorsteuerung über verschiedene und vom jeweiligen Motortyp abhängige Parameter in ihrer Leistungsabgabe gesteuert werden. Eine wichtige Kennlinie der Brennkraftmaschine ist diesbezüglich die Vollast-Kurve, welche die vom Motor maximal bereitstellbare Leistung in Abhängigkeit von der Drehzahl des Motors wiedergibt.

Bei einer maximalen Beschleunigung des Kraftfahrzeuges wird dem Motor die größtmögliche Leistung abverlangt, wozu dieser entlang der Vollast-Kurve gesteuert wird. Dabei zeigt sich jedoch gerade bei modernen, leistungsstarken Brennkraftmaschinen auch mit Aufladung, daß vom Fahrer bei höheren Geschwindigkeiten subjektiv ein unbefriedigendes Beschleunigungsverhalten empfunden wird.

Aus US 6 282 482 B1 ist es bekannt, ein Kraftfahrzeug zur Steuerung der Beschleunigung bzw. Verzögerung mit einer Vorrichtung nach Art eines Schalthebels, eines vergleichbaren Schiebeelements oder einer stufenlosen Regelung auszustatten, um es dem Fahrer zu ermöglichen, das Beschleunigungsverhalten des Fahrzeugs in kontinuierlicher bzw. dynamischer Weise während der Fahrt gemäß seinen Wünschen einzustellen, was insbesondere auch die Möglichkeit für den Fahrer beinhaltet, manuell, etwa durch Einstellen des Schalthebels eine anwachsende Beschleunigung zu wählen. Entsprechend der vom Fahrer getroffenen Einstellung werden über eine Steuerausrüstung eine Reihe unterschiedlicher Fahrzeugkomponenten eingestellt.

Es ist Aufgabe der vorliegenden Erfindung, eine Motorsteuerung für die Brennkraftmaschine eines Kraftfahrzeuges bereitzustellen, welche bei maximaler Beschleunigung des Kraftfahrzeuges dem Fahrer ein subjektiv zufriedenstellendes Beschleunigungsgefühl vermittelt.

Diese Aufgabe wird durch ein Verfahren mit den Merkmalen des Anspruchs 1 sowie eine Motorsteuerung mit den Merkmalen des Anspruchs 2 gelöst.

Vorteilhafte Ausgestaltungen sind in den Unteransprüchen enthalten.

Das erfindungsgemäße Verfahren zur Steuerung der Brennkraftmaschine eines Kraftfahrzeuges ist dadurch gekennzeichnet, daß die Drehzahlabhängigkeit (L(n)) der Vollast-Leistung der Brennkraftmaschine durch entsprechendes Einrichten der Motorsteuerung derart eingestellt wird, daß die von der Brennkraftmaschine im unteren bis mittleren Drehzahlbereich unter Vollast abgegebene Leistung gegenüber der maximal erreichbaren Leistung reduziert wird, so dass in dem unteren bis mittleren Drehzahlbereich die Ungleichung

$\dfrac{dL}{dn} > \dfrac{L}{n}$ erfüllt ist, wobei L(n) die dem Kraftfahrzeug bei einer Drehzahl n zugeführte Leistung angibt, so dass sich bei Beschleunigung des Kraftfahrzeuges unter Abgabe der Vollast-Leistung über den unteren bis mittleren Drehzahlbereich ein positiver Beschleunigungsgradient einstellt.

Der Beschleunigungsgradient ist definitionsgemäß die zeitliche Ableitung der Beschleunigung oder äquivalent die dritte Zeitableitung des vom Fahrzeug zurückgelegten Weges.

Überraschenderweise zeigt sich, daß mit dem beschriebenen Verfahren ein vom Fahrer als angenehm beziehungsweise als leistungsstark empfundenes Beschleunigungsverhalten des Kraftfahrzeuges erreicht wird. Dieses wird subjektiv positiver beurteilt als ein Beschleunigungsverhalten, bei welchem der Beschleunigungsgradient des Kraftfahrzeuges Null oder negativ ist, selbst wenn bei Letzterem objektiv gesehen eine größere absolute Beschleunigung erreicht wird.

Gemäß dem Verfahren wird die von der Brennkraftmaschine im unteren bis mittleren Drehzahlbereich unter Vollast abgegebene Leistung gegenüber der maximal erreichbaren Leistung reduziert. D.h., daß der Motor künstlich gedrosselt wird, um den gewünschten Verlauf der Vollast-Kurve zu erreichen. Hierdurch ist es möglich, sowohl die Zufriedenheit des Benutzers mit dem sportlichen beziehungsweise leistungsstarken Verhalten des Motors zu steigern als auch gleichzeitig den Energieverbrauch und die Schadstoffemissionen zu senken, obgleich es sich hierbei in der Regel um einander widersprechende Zielsetzungen handelt.

Die Erfindung betrifft weiterhin eine Motorsteuerung für die Brennkraftmaschine eines Kraftfahrzeuges, welche dazu eingerichtet ist, ein Verfahren der vorstehend erläuterten Art auszuführen. D. h., daß die Motorsteuerung insbesondere die Drehzahlabhängigkeit der Vollast-Leistung der Brennkraftmaschine derart einstellt, dass die von der Brennkraftmaschine im unteren bis mittleren Drehzahlbereich unter Vollast abgegebene Leistung gegenüber der maximal erreichbaren Leistung reduziert wird, so dass in dem unteren bis mittleren

Drehzahlbereich die Ungleichung $\dfrac{dL}{dn} > \dfrac{L}{n}$ erfüllt ist, wobei L(n) die dem Kraftfahrzeug bei einer Drehzahl n zugeführte Leistung angibt, so dass sich bei Beschleunigung des Kraftfahrzeuges unter Abgabe der Vollast-Leistung über den unteren bis mittleren Drehzahlbereich ein positiver Beschleunigungsgradient einstellt.

Wie im Zusammenhang mit dem Verfahren erläutert wurde, kann hierdurch ein subjektiv sehr zufriedenstellendes Beschleunigungsverhalten des Fahrzeugs erreicht werden.

Gemäß einer bevorzugten Ausgestaltung ist die Motorsteuerung dahingehend ausgebildet, eine auf-

geladene Brennkraftmaschine so anzusteuern, daß die gewünschte Drehzahlabhängigkeit beziehungsweise Vollast-Kurve erreicht wird. Gerade bei aufgeladenen Brennkraftmaschinen, bei denen die Verbrennungsluft unter Überdruck unter Verwendung eines Laders z. B. eines Turboladers oder eines Kompressors in den Brennraum gefördert wird, erweist sich die beschriebene Einrichtung der Motorsteuerung als vorteilhaft, da die "normale" Vollast-Kurve bei diesen Motoren in der Regel einen breiten flachen Bereich aufweist. Letzterer führt bei einer Beschleunigung des Fahrzeuges zu einem negativen Beschleunigungsgradienten, welcher vom Fahrer als nachteilig wahrgenommen wird.

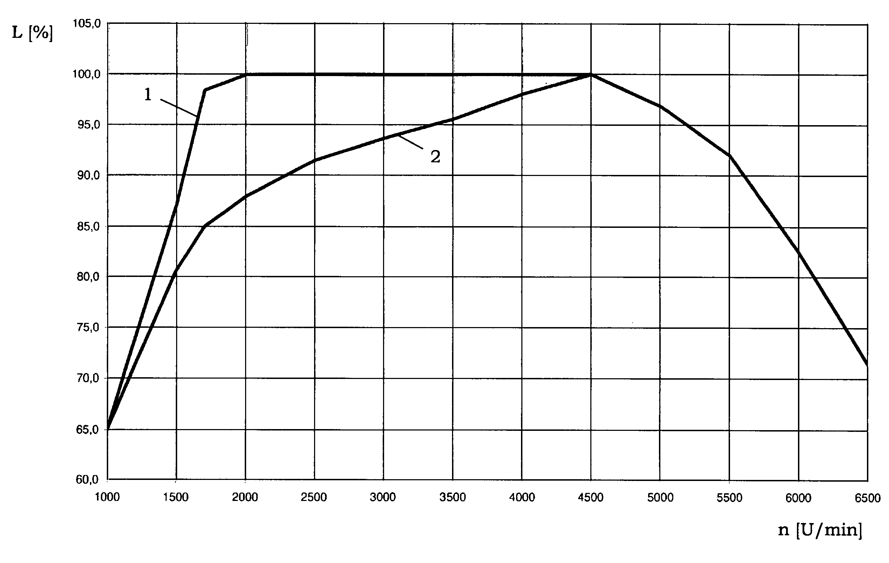

Im Folgenden wird die Erfindung anhand der beigefügten Figur näher erläutert.

Die einzige Figur zeigt in einem Diagramm die Vollast-Kurve einer Brennkraftmaschine mit und ohne eine erfindungsgemäße Motorsteuerung.

Auf der vertikalen Achse des Diagramms ist die Motorleistung L in Prozent der Maximalleistung aufgetragen, während auf der horizontalen Achse die zugehörige Motordrehzahl n in U/min wiedergeben ist. Die beiden im Diagramm eingetragenen Kurven 1 und 2 geben die Vollast-Leistung des Motors wieder, das heißt die bei einer bestimmten Drehzahl ohne ein Abfallen der Drehzahl maximal vom Motor erzeugbare Leistung.

Die obere Kurve 1 ist dabei die "normale" Vollast-Kurve einer Brennkraftmaschine. Charakteristisch hierfür ist der schnelle Anstieg der Leistung auf den Maximalwert von 100%, welcher über einen breiten Drehzahlbereich in diesem Beispiel von etwa 2000 bis 4500 U/min konstant beibehalten wird. Bei noch höheren Drehzahlen fällt die Vollast-Leistung aus technischen Gründen wieder ab.

Wenn das Kraftfahrzeug maximal beschleunigt wird, nimmt die Drehzahl n des Kraftfahrzeuges stetig zu, und die vom Motor bereitgestellte Leistung L ändert sich entsprechend der im Diagramm dargestellten Vollast-Kurve. Dabei zeigt es sich, daß bei der normalen Vollast-Kurve 1 zwar eine sehr große absolute Beschleunigung erreicht wird, daß dies vom Fahrer subjektiv jedoch nicht so empfunden wird. Verantwortlich hierfür ist offenbar die zeitliche Änderung der Beschleunigung oder m.a.W. der Beschleunigungsgradient. Dieser ist bei der Vollast-Kurve 1 bei höheren Drehzahlen negativ, weil die Beschleunigung des Kraftfahrzeuges abnimmt (was jedoch nicht mit einem Bremsen, daß heißt einer negativen Beschleunigung, zu verwechseln ist).

Um das subjektive Empfinden des Fahrers zu berücksichtigen, wird erfindungsgemäß die Motorsteuerung so eingestellt, daß sich die Vollast-Kurve 2 ergibt. Diese ist gekennzeichnet durch einen durchgehend monoton wachsenden Anstieg der Vollast-Leistung $L(n)$, bis sie in diesem Beispiel bei einer Drehzahl von etwa 4500 U/min ihr Maximum von 100% annimmt. Absolut gesehen wird mit einer derartigen Vollast-Kurve 2 eine geringere Gesamtbeschleunigung des Kraftfahrzeuges erreicht. Der resultierende Beschleunigungsgradient des Kraftfahrzeuges ist jedoch im Unterschied zur Kurve 1 stets positiv, so daß die Beschleunigung vom Fahrer subjektiv als angenehmer und leistungsstärker empfunden wird. Anschaulich ausgedrückt wird bei Kurve 2 das Leistungspotential der Brennkraftmaschine stärker über den Drehzahlbereich verteilt eingesetzt und nicht gleich zu Anfang maximal ausgereizt. Neben einer höheren Nutzerzufriedenheit wird auf diese Weise noch der positive Nebeneffekt erzielt, daß der Motor kraftstoffsparender und emissionsärmer betrieben werden kann.

Die Form, welche die Vollast-Kurve $L(n)$ zur Gewährleistung eines positiven Beschleunigungsgradienten haben sollte, lässt sich wie folgt abschätzen:

Nach dem Trägheitsgesetz ruft eine Kraft $F$ an einem Fahrzeug der Masse $m$ die Beschleunigung $\ddot{x}$ hervor:

$$m\ddot{x} = F$$

Durch Multiplikation mit der Geschwindigkeit $\dot{x}$ ergibt sich hieraus die dem Fahrzeug zugeführte Leistung $L$:

$$m\ddot{x} \cdot \dot{x} = F\dot{x} = L$$

Da die Geschwindigkeit $\dot{x}$ des Fahrzeuges (für ein fest vorgegebenes und unverändertes Übersetzungsverhältnis des Getriebes) proportional zur Drehzahl $n$ der Brennkraftmaschine ist, lässt sich mit Hilfe einer Konstanten $k$ hieraus die Beziehung

$$k\,\dot{n}\,n = L(n)$$

herleiten, wobei $L(n)$ die Abhängigkeit der Vollast-Leistung von der Drehzahl gemäß der (gesuchten) Vollast-Kurve beschreibt. Ableitung dieser Gleichung nach der Zeit und Auflösung nach der Drehzahl-Beschleunigung ergibt:

$$k\left(\ddot{n}\,n + \dot{n}^2\right) = \frac{dL}{dn}\,\dot{n}$$

$$\Rightarrow\quad \ddot{n} = \left(\frac{dL}{dn} - k\dot{n}\right)\frac{\dot{n}}{kn} = \left(\frac{dL}{dn} - \frac{L}{n}\right)\frac{\dot{n}}{kn}$$

Die Forderung eines positiven Beschleunigungsgradienten $\dddot{x} > 0$ ist äquivalent zur Forderung

einer positiven Drehzahlbeschleunigung $\ddot{n} > 0$, so daß sich als (Differential-)Ungleichung für die gesuchte Vollast-Kurve ergibt:

$$\frac{dL}{dn} > \frac{L}{n}$$

Alle Vollast-Kurven *L(n)*, welche diese Beziehung erfüllen, führen daher zu dem gewünschten Verhalten des Kraftfahrzeuges bei einer maximalen Beschleunigung.

## Patentansprüche

1. Verfahren zur Steuerung der Brennkraftmaschine eines Kraftfahrzeuges, wobei die Drehzahlabhängigkeit (L(n)) der Vollast-Leistung der Brennkraftmaschine durch Einrichten der Motorsteuerung eingestellt wird,
   **dadurch gekennzeichnet, daß**
   die Drehzahlabhängigkeit (L(n)) der Vollast-Leistung der Brennkraftmaschine durch entsprechendes Einrichten der Motorsteuerung derart eingestellt wird, daß die von der Brennkraftmaschine im unteren bis mittleren Drehzahlbereich unter Vollast abgegebene Leistung gegenüber der maximal erreichbaren Leistung reduziert wird, so dass in dem unteren bis mittleren Drehzahlbereich die Ungleichung
   $$\frac{dL}{dn} > \frac{L}{n}$$ erfüllt ist, wobei L(n) die dem Kraftfahrzeug bei einer Drehzahl n zugeführte Leistung angibt, so dass sich bei Beschleunigung des Kraftfahrzeuges unter Abgabe der Vollast-Leistung über den unteren bis mittleren Drehzahlbereich ein positiver Beschleunigungsgradient einstellt.

2. Motorsteuerung für die Brennkraftmaschine eines Kraftfahrzeuges, wobei die Drehzahlabhängigkeit (L(n)) der Vollast-Leistung der Brennkraftmaschine durch Einrichten der Motorsteuerung einstellbar ist,
   **dadurch gekennzeichnet, daß**
   die Motorsteuerung dahingehend ausgebildet ist, die Drehzahlabhängigkeit (L(n)) der Vollast-Leistung der Brennkraftmaschine so einzustellen, daß die von der Brennkraftmaschine im unteren bis mittleren Drehzahlbereich unter Vollast abgegebene Leistung gegenüber der maximal erreichbaren Leistung reduziert wird, so dass in dem unteren bis mittleren Drehzahlbereich die Ungleichung $\frac{dL}{dn} > \frac{L}{n}$
   erfüllt ist, wobei L(n) die dem Kraftfahrzeug bei einer Drehzahl n zugeführte Leistung angibt, so dass sich bei Beschleunigung des Kraftfahrzeuges unter Abgabe der Vollast-Leistung über den unteren bis mittleren Drehzahlbereich ein positiver Beschleunigungsgradient einstellt.

3. Motorsteuerung nach Anspruch 2,
   **dadurch gekennzeichnet, daß**
   diese dahingehend ausgebildet ist, den Lader einer aufgeladenen Brennkraftmaschine derart anzusteuern, daß die gewünschte Drehzahlabhängigkeit erreicht wird.

## Claims

1. Method for controlling the internal combustion engine of a motor vehicle, the rotational speed dependence (L(n)) of the full-load power of the internal combustion engine being set by adjusting the engine control system,
   **characterized in that**
   the rotational speed dependence (L(n)) of the full-load power of the internal combustion engine is set by correspondingly adjusting the engine control system in such a way that the power output from the engine at full load in the low- to mid-rotational-speed range is reduced in comparison with the maximum obtainable power, so that the inequality $\frac{dL}{dn} > \frac{L}{n}$
   is satisfied in the low- to mid-rotational-speed range, L(n) indicating the power supplied to the motor vehicle at a rotational speed n, so that when the motor vehicle accelerates under full-load power, the acceleration gradient is positive across the low- to mid-rotational-speed range.

2. Engine control system for the internal combustion engine of a motor vehicle, it being possible to set the rotational speed dependence (L(n)) of the full-load power of the internal combustion engine by adjusting the engine control system,
   **characterized in that**
   the engine control system is designed to set the rotational speed dependence (L(n)) of the full-load power of the internal combustion engine in such a way that the power output from the engine at full load in the low- to mid-rotational-speed range is reduced in comparison with the maximum obtainable power,
   so that the inequality $\frac{dL}{dn} > \frac{L}{n}$ is satisfied in the low- to mid-rotational-speed range, L(n) indicating the power supplied to the motor vehicle at a rotational speed n, so that when the motor vehicle accelerates under full-load power, the acceleration gradient is positive across the low- to mid-rotational-speed range.

**3.** Engine control system according to Claim 2, **characterized in that** it is designed to drive the supercharger of a charged internal combustion engine in such a way that the desired rotational speed dependence is obtained.

**caractérisée en ce que** celle-ci est réalisée de manière à commander le surcompresseur d'un moteur à combustion interne suralimenté de telle sorte que la dépendance du régime souhaitée soit obtenue.

**Revendications**

**1.** Procédé de commande du moteur à combustion interne d'un véhicule automobile, dans lequel on ajuste la dépendance du régime (L(n)) de la puissance à pleine charge du moteur à combustion interne par ajustement de la commande de moteur,

**caractérisé en ce que** la dépendance du régime (L(n)) de la puissance à pleine charge du moteur à combustion interne est ajustée par un ajustement correspondant de la commande de moteur de telle sorte que la puissance fournie à pleine charge par le moteur à combustion interne dans la plage de régime inférieure à moyenne soit réduite par rapport à la puissance maximale pouvant être obtenue, de sorte que dans la plage de régime inférieure à moyenne, l'inégalité $\dfrac{dL}{dn} > \dfrac{L}{n}$ soit satisfaite, L(n) indiquant la puissance fournie au véhicule automobile pour un régime n de sorte que dans le cas d'une accélération du véhicule automobile avec fourniture de la puissance à pleine charge, un gradient d'accélération positif s'ajuste sur la plage de régime inférieure à moyenne.

**2.** Commande de moteur pour moteur à combustion interne d'un véhicule automobile, dans laquelle la dépendance du régime (L(n)) de la puissance à pleine charge du moteur à combustion interne peut être ajustée par ajustement de la commande de moteur,

**caractérisée en ce que** la commande de moteur est réalisée de manière à ajuster la dépendance du régime (L(n)) de la puissance à pleine charge du moteur à combustion interne de telle sorte que la puissance fournie par le moteur à combustion interne à pleine charge dans la plage de régime inférieure à moyenne soit réduite par rapport à la puissance maximale pouvant être obtenue, de sorte que dans la plage de régime inférieure à moyenne, l'inégalité $\dfrac{dL}{dn} > \dfrac{L}{n}$ soit satisfaite, L(n) indiquant la puissance fournie au véhicule automobile pour un régime n de sorte que dans le cas d'une accélération du véhicule automobile avec fourniture de la puissance à pleine charge, un gradient d'accélération positif s'ajuste sur la plage de régime inférieure à moyenne.

**3.** Commande de moteur selon la revendication 2,

EP 1 406 000 B1

6